# EUROPEAN PATENT SPECIFICATION

(11) **EP 3 380 707 B1**
(45) Date of publication and mention of the grant of the patent: **11.08.2021**
(21) Application number: 16805176.1
(22) Date of filing: 22.11.2016
(51) Int. Cl.: F01L 9/22, H02K 1/14, H02K 15/02, H02K 16/00, H02K 16/02

(54) **ENGINE VALVE ACTUATION ASSEMBLY AND METHOD**
MOTORVENTILBETÄTIGUNGSANORDNUNG UND VERFAHREN ZUM ZUSAMMENBAU DER ANORDNUNG
ENSEMBLE D'ACTIONNEMENT DES SOUPAPES DE MOTEUR ET MÉTHODE D'ASSEMBLAGE DE L'ENSEMBLE

(30) Priority: 24.11.2015 GB 201520766
(43) Date of publication of application: 03.10.2018
(73) Proprietor: Camcon Auto Limited, Cambridgeshire CB24 9NL (GB)
(72) Inventor: STONE, Roger, Cambridge Cambridgeshire CB4 0WS (GB); EVANS, Owen, Cambridge Cambridgeshire CB4 0WS (GB); KELLY, David, Cambridge Cambridgeshire CB4 0WS (GB); TYRRELL, Richard, Cambridge Cambridgeshire CB4 0WS (GB)
(74) Representative: Sharrock, Daniel John
(86) International application number: PCT/GB2016/053634
(87) International publication number: WO 2017/089754

(56) References cited:
- EP-A1- 0 678 966
- EP-A1- 1 426 568
- DE-A1-102006 013 100
- DE-A1-102012 200 101
- GB-A- 2 035 713
- JP-A- S59 213 271
- JP-A- 2006 329 181
- US-A1- 2015 280 497

## Description

### Field of the disclosure

The present disclosure relates to stators for electrical machines and more particularly to stators for electrical machines incorporating multiple rotors.

### Background of the disclosure

Electrical machines have stators which are generally formed of laminated magnetically permeable material such as ferritic steel, to reduce hysteresis and eddy current losses. The stator laminations are usually thin flat sheets which are stacked and form multiple teeth, which are wound with wire to form the stator poles. EP-A-1426568 relates to a valve driving system for an internal combustion engine which comprises a plurality of valve driving apparatuses. Each valve driving apparatus has an electrical motor and a power transmission mechanism for transmitting motion of the motor to a valve.

EP-A-0678966 discloses a multishaft electric motor which has a plurality of juxtaposed rotors. JP-A-S59213271 concerns a direct current electric machine in which adjacent portions of yokes of upper and lower motors are integrated and used commonly. DE-A-10 2012 200 101 describes a stator for an electric motor. The stator has a stator ring which formed by stator segments. DE-A-10 2006 013 100 relates to an electromagnetic drive having two rotors arranged in a housing.

### Summary of the disclosure

An engine valve actuation assembly according to the invention is claimed in independent claim 1.

The term "individual stator" is used herein to refer to a single stator for receiving a corresponding rotor, as distinct from a stator assembly as described herein which comprises at least two stators for receiving corresponding rotors. Each individual stator may be formed by a set of stator segments, one or more of which segments may be shared with an adjacent stator. According to the invention, an individual stator in an engine valve actuation assembly comprises a peripheral portion which is shared with an adjacent stator.

Each individual stator is preferably divided through the peripheral portion between adjacent teeth into stator segments. More particularly, each individual stator may be divided through the peripheral portion between each tooth and the two adjacent teeth of the stator.

Each segment preferably includes no more than one tooth of any individual stator of the assembly, but may include a tooth of more than one individual stator.

The power density and efficiency of electrical machines is strongly influenced by the volume of wire (formed of copper for example) fitted around each tooth of the stator. The ease of fitting and achievable quantity of wire around each tooth is dependent on the accessibility of each slot for wire winding and the slot opening between adjacent teeth in a fully round, single piece stator. This accessibility reduces with motor size and as the number of teeth increases. It is also often desirable for the slot opening to be reduced for electromagnetic reasons, for example reducing cogging torque, making access for winding through the slot opening infeasible.

The ratio of wire to slot area (fill factor) provides an indication of the wire density around each pole. More wire per slot increases the power of the electrical machine, and reduces the circuit resistance and therefore the losses and associated temperature rise. Forming the stator assembly from stator segments, where the stator is divided through its peripheral portion between each pair of adjacent teeth allows easier winding with free access to all sides of each tooth, and enables the winding density of each slot in the assembled stator to be increased.

Furthermore, in a stator assembly made up of at least two individual stators, sharing at least one segment between adjacent individual stators allows the weight and volume of the complete assembly to be reduced without significantly compromising the magnetic performance of each individual actuator that includes a respective one of the stators.

One or more shared segments may include a tooth of each of two adjacent individual stators.

In an engine having independent actuators for each cylinder valve, the configuration according to independent claim 1 enables the stators of the electrical machines associated with each valve to be formed in a more compact and lighter configuration.

Each stator defines an opening which receives the respective rotor. In an assembly comprising at least two actuators, it may be desirable for one actuator/motor to be able to exert a greater torque than another. At least two individual stators may have respective openings of different diameters. At least two individual stators may have peripheral portions of different diameters. Alternate electrical machines may be configured to exert different torques (first and second torque characteristics for example).

A stator assembly according to the present disclosure may comprise at least three rotors having longitudinal axes which lie in a common plane that extends perpendicular to the axes. Furthermore, an assembly may comprise at least four rotors with their longitudinal axes spaced apart, wherein a first set of the rotors has longitudinal axes which lie in a first common plane, and a second set of the rotors has longitudinal axes which lie in a second common plane spaced apart from the first common plane. For example, the second set may comprise each alternate rotor.

A stator assembly may have provision for at least three rotors having longitudinal axes, of which at least one axis lies outside a common plane extending through two of the axes. At least four rotors may have longitudinal axes which lie in a circle that extends in a plane that is perpendicular to the axes.

In some implementations, the teeth of one individual stator are shorter in the axial direction than the teeth of an adjacent individual stator.

Two individual adjacent stators may have different numbers of teeth.

Changing the axial length of the teeth of a stator and/or its number of teeth relative to another stator are ways in which the torque characteristics of one stator may be adjusted relative to another. This enables different stators to provide different torque outputs to the respective mechanisms driven by each actuator. For example, a stator assembly embodying the invention may be configured for use with an engine equipped with four-valve combustion chambers, with each chamber including two inlet and two exhaust valves. One valve of each pair of inlet and exhaust valves may be designated primary and the other secondary, with the primary and secondary valves requiring actuators with different torque output capabilities.

The number of teeth selected for an individual stator may be 4, 6, 8 or 12 for example.

Each pair of adjacent teeth of each individual stator may define a slot for receiving stator windings. In some implementations, the profile of the slot is asymmetrical about a plane which intersects with the longitudinal axis of the stator and lies mid-way between the respective pair of teeth. The cross-sectional area of each slot may be increased by making better use of the space available for the stator assembly within its "footprint". An increase in the proportion of the total stator assembly area made up by the area of the slot may be used to improve the torque output, efficiency and/or reduce the overall assembly size. For example, increased slot size may be used to accommodate a larger number of wire turns around each tooth, leading to a greater torque from the associated actuator using the same overall stator assembly package envelope. Alternatively, the increased slot area may allow a large diameter wire to be used, leading to lower electrical resistance and therefore greater efficiency. A further possibility facilitated by the presence of a greater slot area is the use of a larger diameter wire with fewer turns around each tooth giving the same performance but lower inductance and therefore improved dynamic control response. Each of these variables may be determined as appropriate to provide the most suitable performance for a given application.

Each slot may define a polygonal shape in a plane perpendicular to the longitudinal axis of an individual stator. A part of this polygonal shape may be defined by the peripheral portion of the stator and may substantially be formed by a single straight side. Alternatively, the side defined by the peripheral portion may substantially consist of two intercepting straight sides. In embodiments seeking to maximise the slot area, the two sides may be in the form of a longer side parallel to an outer surface of the stator assembly, and a shorter side.

In examples of the present disclosure, a winding is provided around each tooth, and each winding is substantially symmetrical in a plane perpendicular to the longitudinal axis of each individual stator about a line which lies in that plane and intersects with the longitudinal axis of the individual stator.

Each winding of each individual stator preferably occupies substantially the same area in a plane perpendicular to the longitudinal axis of the individual stator as the other windings of that stator. This is preferable electromagnetically and for smooth torque delivery.

In some examples, the peripheral portion of each individual stator is substantially square in a plane perpendicular to the longitudinal axis of the individual stator. Such a configuration may optimise the use of the area available for the stator assembly. In particular, it may increase the area (in a plane perpendicular to the longitudinal axis of the individual stator) defined by the slots and therefore the volume available to be filled by the stator windings.

The inner surfaces of the peripheral portion may define a shape of which parts have a greater radial distance from the central longitudinal axis of the stator than a regular polygonal shape with 6 or more sides fitting within the same mutually perpendicular dimensions of height and width, to increase the area defined by the slots relative to a regular polygonal shape.

The inner surfaces of the peripheral portion may substantially define a regular polygonal shape, such as an octagon, hexagon or a square shape in a plane perpendicular to the longitudinal axis of the individual stator, from which the teeth inwardly project. In other examples, these surfaces may substantially define an irregular polygon, such as an irregular octagon in which alternate sides may have different lengths, to increase the area defined by the slots relative to a regular polygon with the same number of sides.

A stator segment may comprise a tooth and a pair of surfaces which extend laterally away from the tooth and are defined by part of the peripheral portion of the respective stator. Preferably, each of these surfaces defines an angle relative to the direction of projection of the tooth which is not substantially less than 90°. This facilitates access to the base of the tooth during the process of winding wire around the tooth. In preferred embodiments, these surfaces are substantially perpendicular to the direction of projection of the tooth.

In some implementations, the outer profile of the wire windings of at least some of the stator segments may extend laterally away from the direction of projection of the tooth to a greater extent than the adjoining inwardly facing surfaces of the stator segment of which the tooth forms a part. Such a configuration may enable each winding of a stator to have substantially the same cross-sectional area in a plane perpendicular to the longitudinal axis of the stator when the adjoining surfaces are relatively narrow to allow access to the base of the respective tooth during the winding process.

The peripheral portion may be divided into stator segments in a plane perpendicular to the longitudinal axis of the stator at a location midway between each pair of adjacent teeth, or closer to one of each pair of adjacent teeth than the other. The divisions between adjacent segments through the peripheral portion may be substantially perpendicular to the outer surface of the peripheral portion or define another angle relative thereto. The location or orientation of the divisions may be selected as appropriate to best suit the manufacturing and/or assembly processes. For example, the divisions may be selected to coincide with intersections between straight sides defined by the inner surface of the peripheral portion (in a plane perpendicular to the longitudinal axis of the stator).

The stator assembly may define opposite outer side surfaces which extend transversely with respect to the longitudinal axes of the stators, and the assembly may include a retainer for engaging one of the outer side surfaces and a coupling arrangement for coupling to the retainer and retaining the stator assembly in position relative to a support surface on the opposite side of the assembly by urging the retainer towards the stator assembly. The retainer may be in the form of a clamping plate for example. The retainer may ensure the structural integrity and/or accurate location of a segmented stator assembly. It may extend over the peripheral portions making up the stator assembly. The retainer may act to clamp each stator assembly against a supporting surface on the opposite side of the assembly. The retainer may transfer a clamping force from fasteners (which fasten the retainer to a supporting surface) onto each of the stator segments. Providing a retainer in engagement with a transverse side surface of the stator assembly facilitates provision of an assembly including multiple individual segmented stators. The retainer can be configured to suit any given transversely extending configuration or number of actuators.

The stator assembly may include first locating arrangements for resisting lateral movement of the stator assembly relative to the support surface at, at least two spaced apart locations. Alternatively or additionally, the stator assembly may include second locating arrangements for resisting lateral movement of the assembly relative to the retainer at, at least two spaced apart locations.

The first locating arrangements ensure that the location of the stator assembly is precisely aligned with and maintained relative to the support surface. This keeps the stator assembly in alignment with the associated rotors mounted for rotation within the stator assembly. The first locating arrangements may be provided at two spaced-apart locations towards opposite ends of a stator assembly. The first locating arrangement may ensure that any changes in the dimensions of the support surface due to expansion when heated are transferred to the stator assembly.

The retainer may be made of a material having similar thermal expansion properties to the support surface. The retainer and support surface may be made of the same material such as aluminium for example. As a result, the retainer, in combination with the second locating arrangements, may assist maintenance of the alignment of the stator assembly with the support surface.

The first locating arrangements may comprise dowels received in corresponding holes in the support surface and the stator assembly. The second locating arrangements may comprise dowels received in corresponding holes in the stator assembly and the retainer. The coupling arrangement may include at least two fasteners for urging the retainer towards the support surface, wherein each fastener extends through the hollow dowels of the first and second locating arrangements. A hollow dowel may form part of the first locating arrangement and part of the second locating arrangement.

Each fastener may be fastened to a structure which provides the support surface.

A method of assembling an engine valve actuation assembly according to the invention is claimed in independent claim 14.

In a further method according to the present disclosure, the stator assembly defines opposite outer side surfaces which extend transversely with respect to the longitudinal axes of the individual stators, and the assembly includes a retainer for engaging one of the outer side surfaces and a coupling arrangement for coupling to the retainer and retaining the stators in position relative to a support surface on the opposite side of the assembly, and the method includes the steps of:
removing the potted stator assembly from the jig; and
fastening the stator assembly relative to the support surface with the retainer and coupling arrangement.

### Brief description of the drawings

Embodiments of the disclosure will now be described by way of example and with reference to the accompanying schematic drawings, wherein:
Figures 1 to 4 show a plan view, front view, end view and perspective view of a segmented stator assembly according to the present disclosure;
Figure 5 is an exploded perspective view of a stator assembly together with part of a supporting end housing according to the present disclosure;
Figures 6 to 9 show a partial perspective view, a top view, a front view and an end view of the assembly of Figure 5 in assembled form;
Figure 10 is a cross-sectional end view in the direction A marked on Figure 8;
Figures 11 to 15 show a top view, front view, end view, rear view and perspective view of the retainer shown in Figure 5;
Figures 16 to 19 show a top view, front view, end view and rear perspective view of the partial end housing shown in Figure 5;
Figure 20 shows a front view of a further segmented stator assembly according to the present disclosure;
Figure 21 is a perspective view of a stator segment comprising teeth having different axial lengths;
Figures 22 to 24 show front views of stator assemblies comprising two individual stators, with one stator of each assembly having a different number of teeth to the other; and
Figures 25 to 27 are front views of three stator assemblies according to three embodiments of the invention, wherein the individual stators of each assembly have the same slot configurations as the other individual stators in the same assembly, and each assembly has a different slot configuration to the other assemblies.

### Detailed description

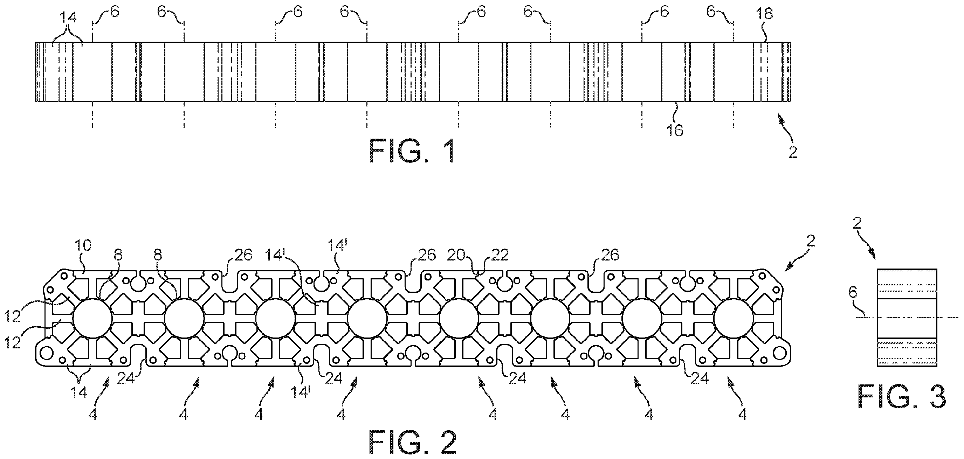

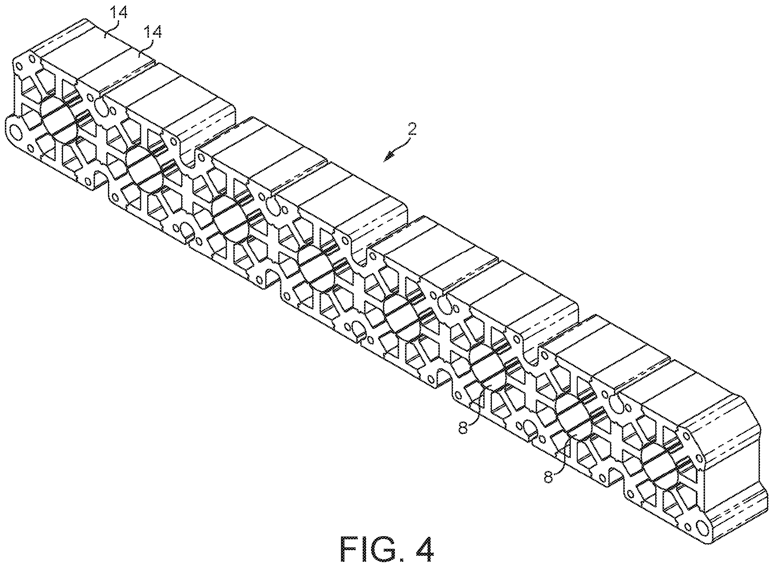

Figures 1 to 4 show a stator assembly 2 according to the present disclosure. In the example depicted in the drawings, the assembly comprises eight individual stators 4. Each individual stator has a longitudinal axis 6, which passes through the centre of a cylindrical opening 8 defined by inner surfaces of each individual stator.

Each individual stator has a peripheral portion 10 which extends circumferentially around its longitudinal axis. Eight teeth 12 extend inwardly towards the axis from the peripheral portion for receiving respective wire windings. The innermost end surfaces of the teeth define the cylindrical opening 8 of the individual stator. It will be appreciated that whilst eight teeth are shown in the drawings for each individual stator, different numbers of teeth may be selected to suit particular requirements.

Each individual stator is formed from a plurality of stator segments 14 which together form the peripheral portion 10. Each segment 14 includes a tooth 12.

Adjoining individual stators include shared segments 14'. Each shared segment 14' forms part of both of the adjoining individual stators and includes a tooth of each individual stator.

The stator assembly defines opposite outer front and rear surfaces 16, 18.

Each stator segment 14 has engagement surfaces shaped for engagement with a complementary engagement surface of each adjacent stator segment. In the configuration shown in the drawings, each pair of complementary engagement surfaces comprises a male tab 20 which engages with a corresponding female groove 22 on the other.

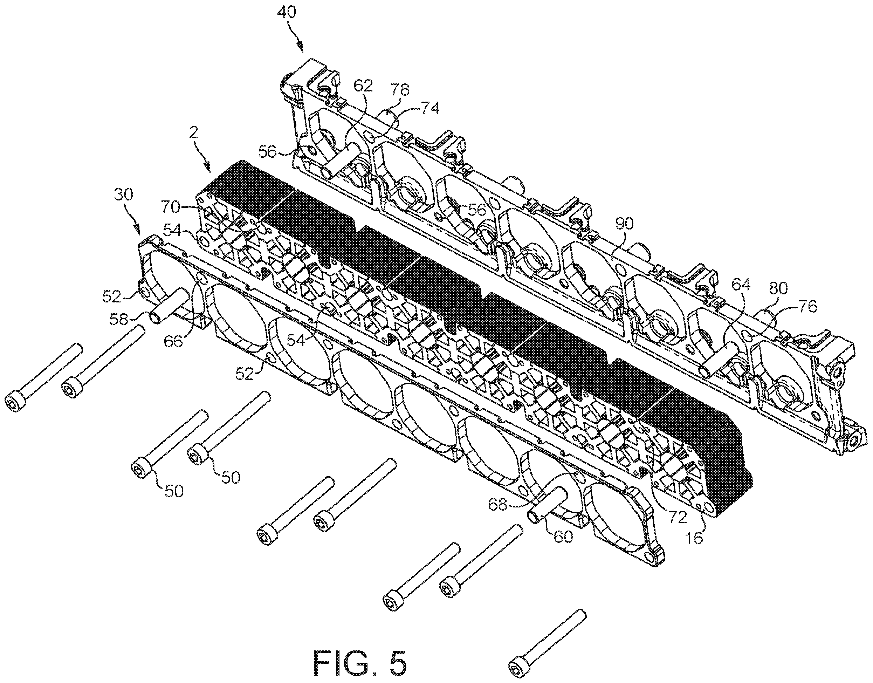

Four axially extending U-shaped grooves 24 are formed in the underside of the stator assembly at equally spaced intervals. They provide a clearance around structural ribs which extend from the end housing 40 (which is shown in Figure 5 for example, although the ribs are omitted). Three similar grooves 26 are formed in the upper surface of the stator assembly at equal intervals. This results from minimising the number of stator segment shapes by using the same segment shapes where appropriate along the upper surface. The presence of the grooves 26 also serves to reduce the overall mass of the stator assembly.

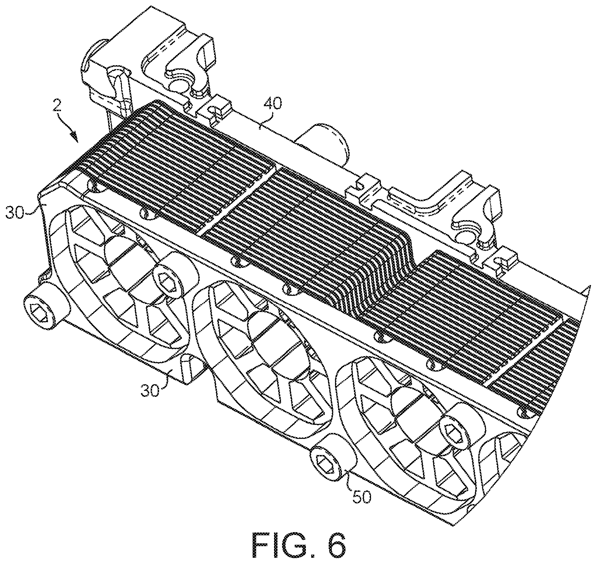

The stator segments may be formed from thin ferritic-based steel laminations as depicted in Figures 5 and 6 for example.

When assembled to form a stator, a wire winding will be provided around each tooth 12. The windings are omitted in the Figures. Each stator segment is wound when disassembled from the others to provide easier access and allow denser packing of the wire, in comparison to a fully round, single piece stator.

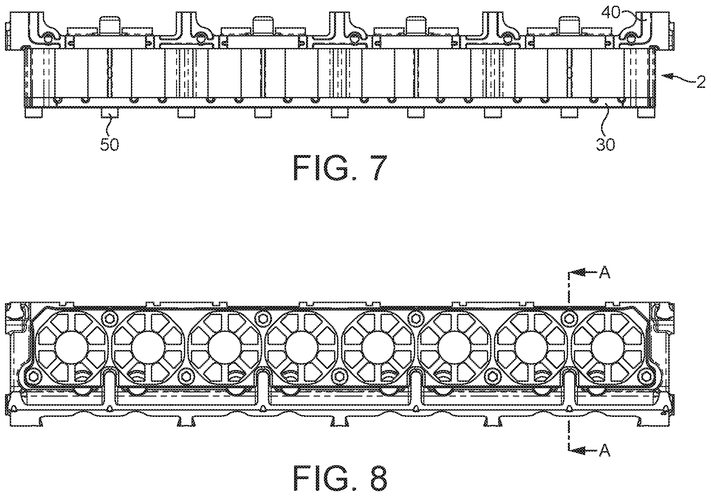

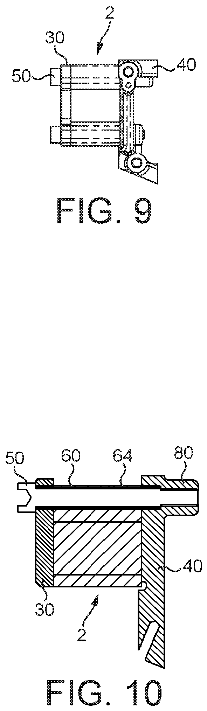

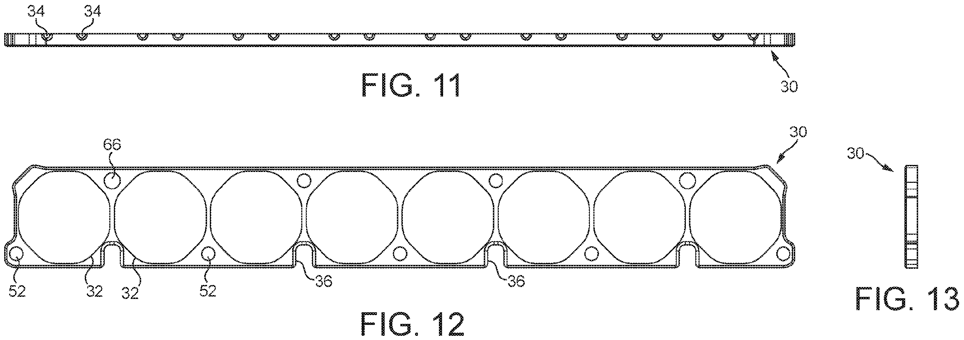

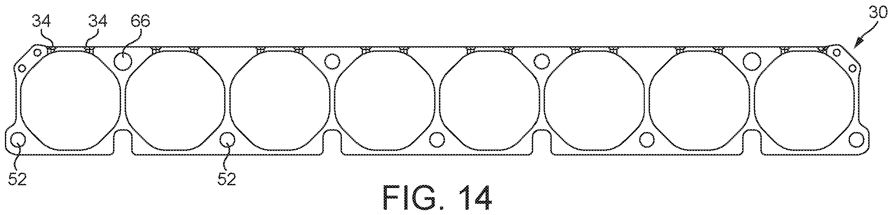

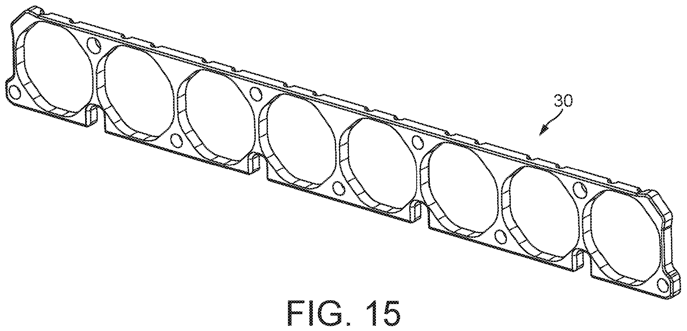

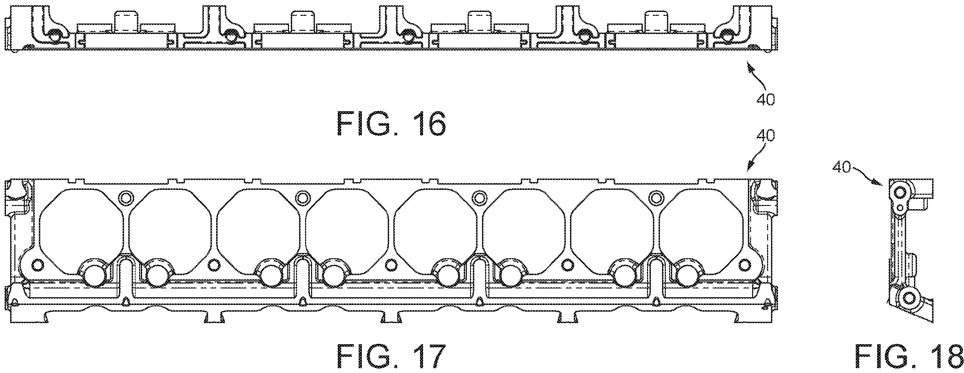

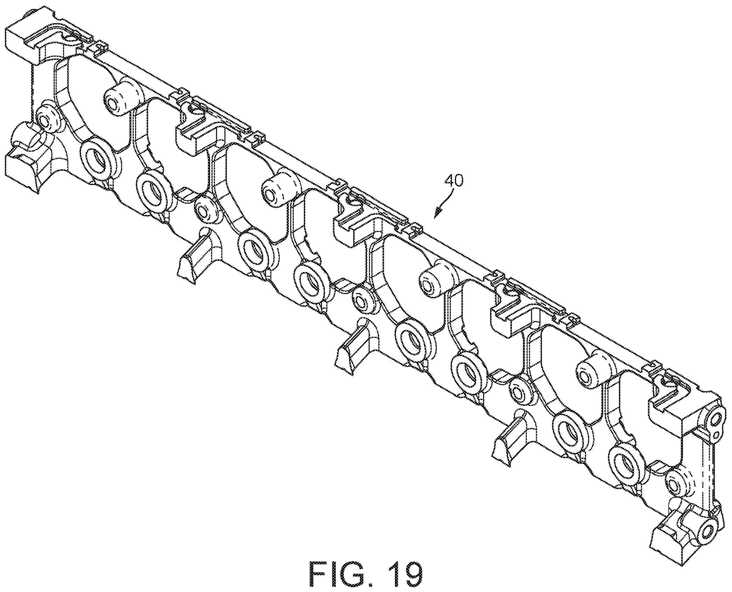

An arrangement for attaching a stator assembly 2 to a support is depicted in the exploded view of Figure 5. A retainer in the form of a clamping plate 30 is provided to engage with the front face 16 of the stator assembly. The stator assembly is mounted onto a support 40. In the example illustrated, the support is an end housing of an engine valve actuator assembly. Only part of the end housing is shown in the drawings for clarity. Further views of the components shown in Figure 5 in an assembled form are shown in Figures 6 to 10. In addition, further views of the clamping plate 30 alone are shown in Figures 11 to 15 and of the end housing 40 alone in Figures 16 to 19.

The stator assembly 2 is fastened to the end housing 40 by bolts 50. Each bolt passes through a hole 52 in the clamping plate 30 and a hole 54 in the stator assembly 2 and is received in a respective hole 56 in the end housing. Each bolt has an outer thread which mates with a complementary thread formed in hole 56.

Two of the bolts also pass through hollow dowels 58, 62 and 60, 64, respectively. Dowels 58 and 60 pass from holes 66 and 68, respectively in the clamping plate 30 and into corresponding holes 70 and 72 in the stator assembly 2. Dowels 62 and 64 pass from the holes 70 and 72 in the stator assembly into corresponding holes 74 and 76 in the end housing. The end housing includes projections 78 and 80 which form threaded hole portions for receiving respective bolts 50, beyond the dowels.

The dowel pairs 58, 62 and 60, 64 may each be replaced by single hollow dowels. Dowels 62 and 64 are provided to precisely align the stator assembly with the end housing. This is to ensure that the stators of the assembly are accurately aligned with their respective rotors which are supported by the end housing.

The dowels 58, 60, 62 and 64 also serve to maintain the stators in the correct alignment with their rotors, notwithstanding different expansion characteristics of the end housing and stator assembly. They may be formed of different materials, with the end housing being an aluminium casting and the stator assembly formed of ferritic steel for example. The clamping plate 30 may be formed of the same material as the end housing so that it has the same expansion characteristics. The end housing and clamping plate may expand to a greater extent than the material of the stator assembly when heated. In that event, the dowels 50, 60, 62 and 64 are of sufficient strength to withstand the resulting shear forces and exert lateral forces on the stator assembly which tend to keep it in alignment with the end housing.

The clamping plate defines eight rounded octagonal openings 32. As can be seen in the assembled structure of Figure 6, each opening 32 is located for alignment with a corresponding individual stator 4. The clamping plate extends over the peripheral portion of each stator and engages each segment of each stator to provide a clamping force onto each segment. It spreads the clamping forces exerted by the bolts 50 over the front faces of the peripheral portions.

The end housing defines a support surface 90 having a profile which corresponds to features of the side profile of the stator assembly 2.

In an assembly process, the stator segments 14 are individually wound with their respective windings. They are then placed in a jig which engages the outer profile of the segments and includes a tight-fitting mandrel to engage with the cylindrical central opening of each stator to ensure the correct relative positions of the segments. The stator assembly is then potted using a suitable material and process such as over-moulding with thermoplastic or impregnation with epoxy. Once the potting compound has fully set, the stator assembly as a whole may be removed from the jig. It is then fastened onto the end housing as shown in Figures 5 to 10.

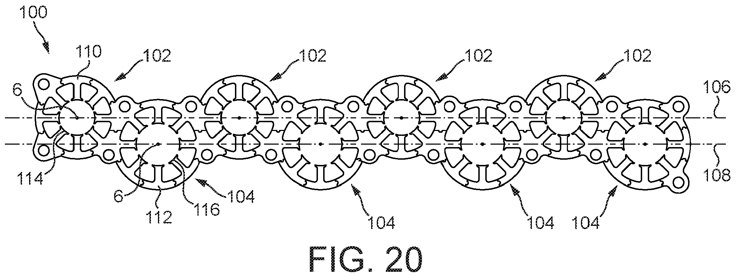

Another stator assembly 100 according to the present disclosure is shown in Figure 20. It comprises eight individual stators, with individual stators 102 forming a first set and individual stators 104 forming a second set. The longitudinal axes 6 of the stators of the first set 102 lie in a first common plane indicated in Figure 20 by dashed line 106. The longitudinal axes 6 of the stators of the second set 104 lie in a second common plane denoted in Figure 20 by dashed line 108. Alternate stators along the length of the group belong to the first and second sets. The second common plane 108 is spaced from the first common plane 106 in a direction perpendicular to the longitudinal axes 6.

Each of the individual stators has a generally circular peripheral portion 110, 112. Each individual stator has a cylindrical central opening 114, 116 coaxial with its longitudinal axis 6. The outer diameters of the peripheral portions of the individual stators in the first set are smaller than the corresponding dimensions of the individual stators in the second set. The central openings 114 of the first set are smaller than the central openings 116 of the second set. This allows the stators of the second set to accommodate larger rotors and a greater winding volume, so that the electrical machines of which they form part are able to generate a greater torque than the electrical machines including the stators of the first set 102. Provision of pairs of electrical machines having different torque characteristics may be beneficial in some applications. One example may be where a pair of electrical machines is used to control a pair of inlet or exhaust valves in an internal combustion engine.

In other configurations, the individual stators of two sets may have peripheral portions with different outer diameters, but central openings with substantially the same diameters to provide stators of different sizes for use with rotors having the same diameter.

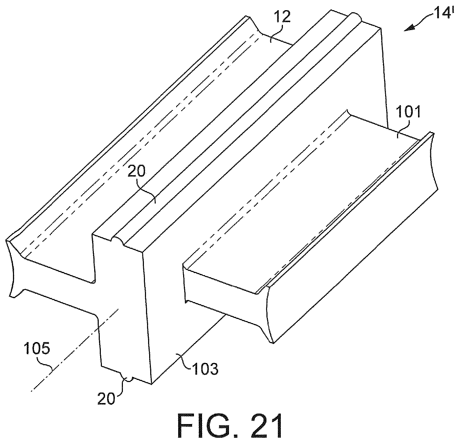

Figure 21 shows a perspective view of a shared stator segment 14'. It includes two teeth 12 and 101, each associated with a respective individual stator in a complete stator assembly. The segment includes a central body 103, with the teeth extending from opposite sides thereof. The body 103 forms part of the peripheral portion of both of the stators associated with the teeth. The segment body 103 has a central axis 105 which is parallel to the longitudinal axis of the two stators in the complete stator assembly. Tooth 12 has the same length in the axial direction as the body 103, whilst tooth 101 is shorter than tooth 12 and body 103 in the axial direction. The other teeth of the individual stators with which the teeth 12 and 100 are associated have the same axial length as the respective tooth 12 or 100.

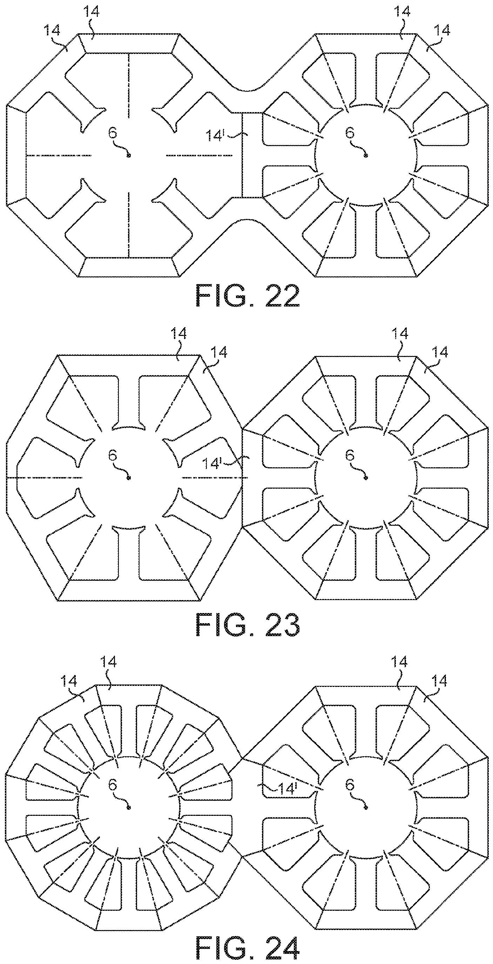

Figures 22 to 24 illustrate provision of adjacent individual stators having different numbers of teeth. Each stator assembly includes a shared segment 14'. In Figure 22, a stator having 4 teeth is adjacent to a stator having 8 teeth, in Figure 23 the stators have 6 and 8 teeth, respectively, and in Figure 24 they have 12 and 8 teeth, respectively. In each stator, the teeth are equally spaced around the central longitudinal axis, which extends perpendicular to the plane of the drawings. In each stator, the peripheral portion is substantially in the form of a regular polygon.

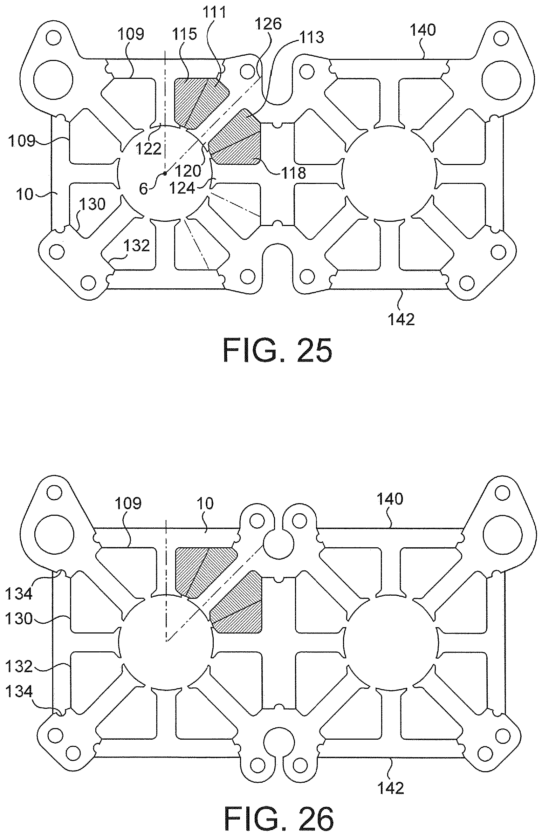

Stator assemblies described herein define slots between adjacent teeth of each stator for receiving stator windings. In the embodiment depicted in Figures 1 to 4, it can be seen that the slots between adjacent teeth are symmetrical in a plane perpendicular to the longitudinal axes of the stators about a line mid-way between adjacent teeth which intersects with the longitudinal axis. Figures 25 to 27 depict further embodiments in which the slots are asymmetrical in a plane perpendicular to the longitudinal axes of the stators. In these examples, the slots 110 define polygonal shapes which do not have a line of symmetry (in the plane perpendicular to the longitudinal axes). The shapes of these slots have been designed with a view to increasing the slot area relative to a symmetrical configuration without increasing the maximum overall dimensions of the stator assembly. In the examples in Figures 25 to 27, the peripheral portions vary from a predominantly octagonal configuration to an essentially square shape and from Figure 25 to 27, the extent to which the slots extend towards the four corners increases.

Examples of areas to be occupied by stator windings are indicated in Figures 25 and 26. Shaded areas 111 and 113 on either side of tooth 120 in Figure 25 indicate areas to be occupied by the winding associated with tooth 120. Area 115 is associated with an adjacent tooth 122 and area 118 denotes an area to be occupied by a winding associated with an adjacent tooth 124 on the other side of tooth 120. These areas are determined such that areas 111 and 113 are equal and symmetrical about the direction 126 in which the tooth 120 extends towards the central axis 6 of the stator. Also, the proportion of each slot allocated to the windings of the associated pair of adjacent teeth is divided such that the associated areas are equal. Thus, area 111 is equal in area to area 115 and area 113 is equal in area to area 118.

Corresponding areas are shown in Figure 26.

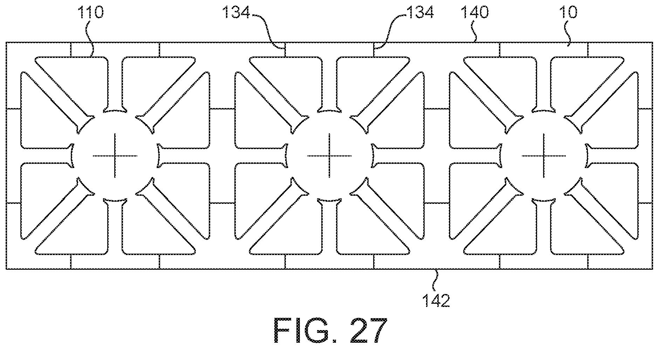

Each tooth of the stators shown in Figures 25 to 27 forms part of a stator segment. Each stator segment also defines inwardly facing surfaces 130, 132 (see Figure 26) on opposite sides of the respective tooth, extending away from the base of the tooth. Each of surfaces 130 and 132 is substantially perpendicular to the direction in which the tooth extends towards the central longitudinal axis 6 of the stator in the configurations of Figures 25 and 26. The surfaces 130, 132 form part of the inner surface of the peripheral portion of the stator. In the embodiments of Figures 25 and 26, the divisions 134 between adjacent segments are positioned such that the surfaces 130 and 132 extend along straight lines in a plane perpendicular to the longitudinal axis of the stator. This assists with access to the base of each tooth during the process of winding wire around each tooth. In the embodiment of Figure 27, these divisions are positioned approximately mid-way between adjacent teeth. It will be appreciated that the location of these divisions may be adjusted if desired to best facilitate the assembly process.

The stator assemblies shown in Figures 25 and 26 include a number of fixing holes which extend perpendicular to the plane of the drawing for use in fastening the stator assembly to a supporting substrate. No such holes are shown in the embodiment of Figure 27. A stator assembly may be constrained without the need for fixing holes, for example by use of a surrounding casing. Nevertheless, if required, the configuration depicted in Figure 27 could readily be adapted to include suitable fixing holes.

Each of the embodiments depicted in Figures 25 to 27 is configured with the longitudinal axes 6 of the stators lying in a common plane. The peripheral portions of the stators define outer parallel sides 140,142 which are in turn parallel to the plane containing the longitudinal axes. The asymmetrical slot configurations serve to increase the area of these stators occupied by the slots between adjacent teeth for a given spacing between parallel planes 140,142.

## Claims

1. An engine valve actuation assembly including an electrical machine comprising at least two actuator rotors and at least two individual stators (4, 102, 104), wherein:
the rotors are mounted for rotation about longitudinal axes (6) of the respective individual stators,
each rotor has a respective linkage for coupling the rotor to an engine valve stem,
each individual stator comprises a peripheral portion (10, 110, 112) extending around the longitudinal axis of the stator, and teeth (12) extending inwardly towards the axis from the peripheral portion, for receiving wire windings of the stator, and
the engine valve actuation assembly includes a stator assembly (2, 100) which comprises the at least two individual stators (4, 102, 104),
**characterised in that**
part of the peripheral portion of each individual stator forms part of the peripheral portion of an adjacent individual stator.

2. The engine valve actuation assembly of claim 1, wherein:
each individual stator is divided through its peripheral portion between each pair of adjacent teeth into stator segments (14), and
at least one segment is a shared segment (14') which forms part of at least two adjacent individual stators.

3. The engine valve actuation assembly of claim 1 or claim 2, wherein each individual stator (102, 104) defines a circular opening (114, 116) which receives the respective rotor, and two individual stators have respective openings of different diameters.

4. The engine valve actuation assembly of any preceding claim, comprising at least three individual stators (4, 102, 104) having longitudinal axes (6) which lie in a common plane (106, 108) that extends perpendicular to the axes.

5. The engine valve actuation assembly of any preceding claim, comprising at least three individual stators (102, 104) with their longitudinal axes (6) spaced apart, wherein a first set (102) of the individual stators has longitudinal axes which lie in a first common plane (106), and a second set (104) of the individual stators has longitudinal axes which lie in a second common plane (108) spaced apart from the first common plane.

6. The engine valve actuation assembly of claim 5, wherein, along the stator assembly, alternate individual stators belong to the second set (104) of individual stators.

7. The engine valve actuation assembly of any preceding claim, wherein the teeth (101) of one individual stator are shorter in the axial direction than the teeth (12) of an adjacent individual stator.

8. The engine valve actuation assembly of any preceding claim, wherein two individual adjacent stators have different numbers of teeth (12).

9. The engine valve actuation assembly of any preceding claim, wherein the stator assembly defines opposite outer side surfaces (16, 18) which extend transversely with respect to the longitudinal axes of the individual stators, and the assembly includes a retainer (30) for engaging one (16) of the outer side surfaces and a coupling arrangement for coupling to the retainer and retaining the stator assembly in position relative to a support surface (40) on the opposite side of the assembly.

10. The engine valve actuation assembly of claim 9, including first locating arrangements (62, 64) for resisting lateral movement of the stator assembly relative to the support surface (40) at at least two spaced apart locations.

11. The engine valve actuation assembly of claim 9 or claim 10, including second locating arrangements (58, 60) for resisting lateral movement of the stator assembly (2) relative to the retainer (30) at at least two spaced apart locations.

12. The engine valve actuation assembly of claim 11 when dependent on claim 10, wherein the first locating arrangements comprise hollow dowels (62, 64) received in corresponding holes (70, 72, 74, 76) in the support surface (40) and the stator assembly (2) and the second locating arrangements comprise hollow dowels (58, 60) received in corresponding holes (70, 72, 66, 68) in the stator assembly and the retainer.

13. The engine valve actuation assembly of claim 12, wherein the coupling arrangement includes at least two fasteners (50) for urging the retainer towards the support surface, wherein each fastener extends through the hollow dowels of the first and second locating arrangements.

14. A method of assembling the engine valve actuation assembly of claim 2 or any of claims 3 to 13 when dependent directly or indirectly on claim 2, comprising the steps of:
providing wire windings on the stator segments;
assembling the stator segments in a jig to form the stator assembly; and
potting the stator assembly.

15. The method of claim 14, wherein the stator assembly defines opposite outer side surfaces (16, 18) which extend transversely with respect to the longitudinal axes (6) of the individual stators, and the assembly includes a retainer (30) for engaging one of the outer side surfaces and a coupling arrangement for coupling to the retainer and retaining the stator assembly (2) in position relative to a support surface (40) on the opposite side of the assembly, and the method includes the steps of:
removing the potted stator assembly from the jig; and
fastening the stator assembly relative to the support surface with the retainer and coupling arrangement.

## Patentansprüche

1. Motorventilbetätigungsanordnung, die eine elektrische Maschine umfasst, die mindestens zwei Aktuatorrotoren und mindestens zwei einzelne Statoren (4, 102, 104) umfasst, wobei:
die Rotoren zur Drehung um Längsachsen (6) der jeweiligen einzelnen Statoren angebracht sind,
jeder Rotor eine jeweilige Verbindung zum Koppeln des Rotors mit einem Motorventilschaft aufweist,
jeder einzelne Stator einen Umfangsabschnitt (10, 110, 112) umfasst, der sich um die Längsachse des Stators erstreckt, und sich Zähne (12) nach innen hin zu der Achse von dem Umfangsabschnitt erstrecken, um Drahtwicklungen des Stators aufzunehmen, und
die Motorventilbetätigungsanordnung eine Statoranordnung (2, 100) umfasst, die die mindestens zwei einzelnen Statoren (4, 102, 104) umfasst,
**dadurch gekennzeichnet, dass**
ein Teil des Umfangsabschnitts jedes einzelnen Stators einen Teil des Umgangsabschnitts eines benachbarten einzelnen Stators bildet.

2. Motorventilbetätigungsanordnung nach Anspruch 1, wobei:
jeder einzelne Stator durch seinen Umfangsabschnitt zwischen jedem Paar von benachbarten Zähnen in Statorsegmente (14) unterteilt ist, und
mindestens ein Segment ein gemeinsames Segment (14') ist, das einen Teil von mindestens zwei benachbarten einzelnen Statoren bildet.

3. Motorventilbetätigungsanordnung nach Anspruch 1 oder Anspruch 2, wobei jeder einzelne Stator (102, 104) eine kreisrunde Öffnung (114, 116) definiert, die den jeweiligen Rotor aufnimmt, und zwei einzelne Statoren jeweilige Öffnungen unterschiedlichen Durchmessers aufweisen.

4. Motorventilbetätigungsanordnung nach einem der vorhergehenden Ansprüche, umfassend mindestens drei einzelne Statoren (4, 102, 104) mit Längsachsen (6), die in einer gemeinsamen Ebene (106, 108) liegen, die sich senkrecht zu den Achsen erstreckt.

5. Motorventilbetätigungsanordnung nach einem der vorhergehenden Ansprüche, umfassend mindestens drei einzelne Statoren (102, 104), deren Längsachsen (6) beabstandet sind, wobei ein erster Satz (102) der einzelnen Statoren Längsachsen aufweist, die in einer ersten gemeinsamen Ebene (106) liegen, und ein zweiter Satz (104) der einzelnen Statoren Längsachsen aufweist, die in einer zweiten gemeinsamen Ebene (108) liegen, die von der ersten gemeinsamen Ebene beabstandet ist.

6. Motorventilbetätigungsanordnung nach Anspruch 5, wobei, entlang der Statoranordnung, sich abwechselnde einzelne Statoren zu dem zweiten Satz (104) von einzelnen Statoren gehören.

7. Motorventilbetätigungsanordnung nach einem der vorhergehenden Ansprüche, wobei die Zähne (101) eines einzelnen Stators in der axialen Richtung kürzer sind als die Zähne (12) eines benachbarten einzelnen Stators.

8. Motorventilbetätigungsanordnung nach einem der vorhergehenden Ansprüche, wobei zwei einzelne benachbarte Statoren unterschiedliche Anzahlen von Zähnen (12) aufweisen.

9. Motorventilbetätigungsanordnung nach einem der vorhergehenden Ansprüche, wobei die Statoranordnung gegenüberliegende äußere Seitenflächen (16, 18) definiert, die sich quer in Bezug auf die Längsachsen der einzelnen Statoren erstrecken, und die Anordnung eine Halterung (30) zum Eingreifen in eine (16) der äußeren Seitenflächen und eine Kopplungsanordnung zum Koppeln an die Halterung und Halten der Statoranordnung in Position relativ zu einer Stützfläche (40) an der gegenüberliegenden Seite der Anordnung umfasst.

10. Motorventilbetätigungsanordnung nach Anspruch 9, umfassend erste Fixierungsanordnungen (62, 64) zum Abfangen einer seitlichen Bewegung der Statoranordnung relativ zu der Stützfläche (40) an mindestens zwei beabstandeten Stellen.

11. Motorventilbetätigungsanordnung nach Anspruch 9 oder Anspruch 10, umfassend zweite Fixierungsanordnungen (58, 60) zum Abfangen einer seitlichen Bewegung der Statoranordnung (2) relativ zu der Halterung (30) an mindestens zwei beabstandeten Stellen.

12. Motorventilbetätigungsanordnung nach Anspruch 11, wenn abhängig von Anspruch 10, wobei die ersten Fixierungsanordnungen Hohlstifte (62, 64) umfassen, die in entsprechenden Löchern (70, 72, 74, 76) in der Stützfläche (40) und der Statoranordnung (2) aufgenommen sind, und die zweiten Fixierungsanordnungen Hohlstifte (58, 60) umfassen, die in entsprechenden Löchern (70, 72, 66, 68) in der Statoranordnung und der Halterung aufgenommen sind.

13. Motorventilbetätigungsanordnung nach Anspruch 12, wobei die Kopplungsanordnung mindestens zwei Befestigungselemente (50) zum Drücken der Halterung hin zu der Stützfläche umfasst, wobei sich jedes Befestigungselement durch die Hohlstifte der ersten und zweiten Fixierungsanordnungen erstreckt.

14. Verfahren zum Zusammenbauen der Motorventilbetätigungsanordnung nach Anspruch 2 oder einem der Ansprüche 3 bis 13, wenn direkt oder indirekt abhängig von Anspruch 2, umfassend die folgenden Schritte:
Bereitstellen von Drahtwicklungen an den Statorsegmenten;
Zusammenbauen der Statorsegmente in einer Schablone, um die Statoranordnung auszubilden; und
Vergießen der Statoranordnung.

15. Verfahren nach Anspruch 14, wobei die Statoranordnung gegenüberliegende äußere Seitenflächen (16, 18) definiert, die sich quer in Bezug auf die Längsachsen (6) der einzelnen Statoren erstrecken, und die Anordnung eine Halterung (30) zum Eingreifen in eine der äußeren Seitenflächen und eine Kopplungsanordnung zum Koppeln an die Halterung und Halten der Statoranordnung (2) in Position relativ zu einer Stützfläche (40) an der gegenüberliegenden Seite der Anordnung umfasst, und wobei das Verfahren die folgenden Schritte umfasst:
Entfernen der vergossenen Statoranordnung aus der Schablone; und
Befestigen der Statoranordnung relativ zu der Stützfläche mit der Halterung und der Kopplungsanordnung.

## Revendications

1. Ensemble d'actionnement de soupape de moteur incluant une machine électrique comprenant au moins deux rotors actionneurs et au moins deux stators individuels (4, 102, 104), dans lequel :
les rotors sont montés pour la rotation autour d'axes longitudinaux (6) des stators individuels respectifs,
chaque rotor a une tringlerie respective pour coupler le rotor à une tige de soupape de moteur,
chaque stator individuel comprend une portion périphérique (10, 110, 112) s'étendant autour de l'axe longitudinal du stator, et des dents (12) s'étendant vers l'intérieur vers l'axe à partir de la portion périphérique, pour recevoir des enroulements de fil du stator, et
l'ensemble d'actionnement de soupape de moteur inclut un ensemble de stators (2, 100) qui comprend les au moins deux stators individuels (4, 102, 104),
**caractérisé en ce que**
une partie de la portion périphérique de chaque stator individuel forme une partie de la portion périphérique d'un stator individuel adjacent.

2. Ensemble d'actionnement de soupape de moteur selon la revendication 1, dans lequel :
chaque stator individuel est divisé à travers sa portion périphérique entre chaque paire de dents adjacentes en segments de stator (14), et
au moins un segment est un segment partagé (14') qui forme une partie d'au moins deux stators individuels adjacents.

3. Ensemble d'actionnement de soupape de moteur selon la revendication 1 ou la revendication 2, dans lequel chaque stator individuel (102, 104) définit une ouverture circulaire (114, 116) qui reçoit le rotor respectif, et deux stators individuels ont des ouvertures respectives de différents diamètres.

4. Ensemble d'actionnement de soupape de moteur selon une quelconque revendication précédente, comprenant au moins trois stators individuels (4, 102, 104) ayant des axes longitudinaux (6) qui se trouvent dans un plan commun (106, 108) qui s'étend perpendiculairement aux axes.

5. Ensemble d'actionnement de soupape de moteur selon une quelconque revendication précédente, comprenant au moins trois stators individuels (102, 104) avec leurs axes longitudinaux (6) espacés les uns des autres, dans lequel un premier jeu (102) des stators individuels a des axes longitudinaux qui se trouvent dans un premier plan commun (106), et un second jeu (104) des stators individuels a des axes longitudinaux qui se trouvent dans un second plan commun (108) espacé du premier plan commun.

6. Ensemble d'actionnement de soupape de moteur selon la revendication 5, dans lequel, le long de l'ensemble de stators, des stators individuels alternés appartiennent au second jeu (104) de stators individuels.

7. Ensemble d'actionnement de soupape de moteur selon une quelconque revendication précédente, dans lequel les dents (101) d'un stator individuel sont plus courtes dans la direction axiale que les dents (12) d'un stator individuel adjacent.

8. Ensemble d'actionnement de soupape de moteur selon une quelconque revendication précédente, dans lequel deux stators adjacents individuels ont différents nombres de dents (12).

9. Ensemble d'actionnement de soupape de moteur selon une quelconque revendication précédente, dans lequel l'ensemble de stators définit des surfaces latérales extérieures opposées (16, 18) qui s'étendent transversalement par rapport aux axes longitudinaux des stators individuels, et l'ensemble inclut un élément de retenue (30) pour entrer en prise avec une (16) des surfaces latérales extérieures, et un agencement de couplage pour se coupler à l'élément de retenue et retenant l'ensemble de stators dans une position relativement à une surface de support (40) sur le côté opposé de l'ensemble.

10. Ensemble d'actionnement de soupape de moteur selon la revendication 9, incluant des premiers agencements de positionnement (62, 64) pour résister à un mouvement latéral de l'ensemble de stators relativement à la surface de support (40) à au moins deux emplacements espacés l'un de l'autre.

11. Ensemble d'actionnement de soupape de moteur selon la revendication 9 ou la revendication 10, incluant des seconds agencements de positionnement (58, 60) pour résister à un mouvement latéral de l'ensemble de stators (2) relativement à l'élément de retenue (30) à au moins deux emplacements espacés l'un de l'autre.

12. Ensemble d'actionnement de soupape de moteur selon la revendication 11 lorsqu'elle dépend de la revendication 10, dans lequel les premiers agencements de positionnement comprennent des goujons creux (62, 64) reçus dans des trous correspondants (70, 72, 74, 76) dans la surface de support (40) et l'ensemble de stators (2) et les seconds agencements de positionnement comprennent des goujons creux (58, 60) reçus dans des trous correspondants (70, 72, 66, 68) dans l'ensemble de stators et l'élément de retenue.

13. Ensemble d'actionnement de soupape de moteur selon la revendication 12, dans lequel l'agencement de couplage inclut au moins deux éléments de fixation (50) pour pousser l'élément de retenue vers la surface de support, dans lequel chaque élément de fixation s'étend à travers les goujons creux des premier et second agencements de positionnement.

14. Procédé d'assemblage de l'ensemble d'actionnement de soupape de moteur selon la revendication 2 ou l'une quelconque des revendications 3 à 13 lorsqu'elle dépend directement ou indirectement de la revendication 2, comprenant les étapes de :
la fourniture d'enroulements de fil sur les segments de stator ;
l'assemblage des segments de stator dans un gabarit de montage pour former l'ensemble de stators ; et
l'enrobage de l'ensemble de stators.

15. Procédé selon la revendication 14, dans lequel l'ensemble de stators définit des surfaces latérales extérieures opposées (16, 18) qui s'étendent transversalement par rapport aux axes longitudinaux (6) des stators individuels, et l'ensemble inclut un élément de retenue (30) pour entrer en prise avec une des surfaces latérales extérieures et un agencement de couplage pour se coupler à l'élément de retenue et retenir l'ensemble de stators (2) en position relativement à une surface de support (40) sur le côté opposé de l'ensemble, et le procédé inclut les étapes de :
l'enlèvement de l'ensemble de stators enrobé à partir du gabarit de montage ; et
la fixation de l'ensemble de stators relativement à la surface de support avec l'élément de retenue et l'agencement de couplage.
